# EUROPÄISCHE PATENTSCHRIFT

(11) **EP 2 137 015 B1**
(45) Veröffentlichungstag und Bekanntmachung des Hinweises auf die Patenterteilung: **18.05.2011**
(21) Anmeldenummer: 08716636.9
(22) Anmeldetag: 19.03.2008
(51) Int. Cl.: B60D 1/06

(54) **KUGELKUPPLUNG MIT RELATIVBEWEGLICH AUFGENOMMENER DICHTUNG**
BALL COUPLING COMPRISING A SEAL ACCOMMODATED TO BE RELATIVELY MOVABLE
ATTELAGE À BOULE PRÉSENTANT UN JOINT D'ÉTANCHÉITÉ LOGÉ RELATIVEMENT MOBILE

(30) Priorität: 10.04.2007 DE 102007016896
(43) Veröffentlichungstag der Anmeldung: 30.12.2009
(73) Patentinhaber: Jost-Werke GmbH, 63263 Neu-Isenburg (DE)
(72) Erfinder: SZCZEPANEK, Udo, 82223 Eichenau (DE)
(74) Vertreter: Trossin, Hans-Jürgen
(86) Internationale Anmeldenummer: PCT/EP2008/002218
(87) Internationale Veröffentlichungsnummer: WO 2008/122350

(56) Entgegenhaltungen:
- EP-A- 1 369 266
- DE-A1-102005 022 879
- DE-U1- 20 116 706
- GB-A- 544 759
- GB-A- 2 251 838

## Beschreibung

Die vorliegende Erfindung betrifft eine Kugelkupplung zur Kupplung eines Zugfahrzeugs mit einem Nachlauffahrzeug, umfassend eine mit einem der Fahrzeuge: Zugfahrzeug oder Nachlauffahrzeug, verbundene oder verbindbare Kupplungskugel und eine mit dem jeweils anderen Fahrzeug verbundene oder verbindbare Kupplungspfanne, welche mit der Kupplungskugel kuppelbar ist, wobei genauer die Kupplungskugel einen konvexen Anlagebereich aufweist und die Kupplungspfanne in einer Kupplungsausnehmung einen konkaven Gegenanlagebereich aufweist, welche Bereiche im Kupplungszustand der Kugelkupplung unter Bildung eines Kupplungsanlagebereichs aneinander anliegen und zwischen welchen die Kupplungskugel und die Kupplungspfanne bei Entkupplung der Kugelkupplung trennbar sind, wobei ferner ein Kupplungselement: Kupplungspfanne oder Kupplungskugel, eine Dichtung trägt, welche im Kupplungszustand den Kupplungsanlagebereich gegen die Umgebung abdichtet.

Eine derartige Kugelkupplung ist aus der DE 10 2005 022 879 A1 bekannt. Die Dichtung wird von dem sie tragenden Kupplungselement starr gehalten und liegt dichtend an dem sie nicht tragenden Kupplungselement an. Dabei hat sich als nachteilig herausgestellt, dass durch Materialabrieb im Kupplungsanlagebereich mit zunehmendem Betrieb der Kugelkupplung sich die Relativpositionen von Kupplungskugel und Kupplungspfanne im Kupplungszustand verändern und sich dadurch die Anlagesituation der Dichtung an dem jeweils anderen, sie nicht tragenden Kupplungselement ändert. Dadurch können lokal sehr hohe Belastungen auf die Dichtung wirken, was zur Beeinträchtigung der Dichtungswirkung an dieser Stelle führen kann.

Es ist daher Aufgabe der vorliegenden Erfindung, eine gattungsgemäße Kugelkupplung mit gegenüber dem Stand der Technik erhöhter Standfestigkeit bereitzustellen.

Diese Aufgabe wird erfindungsgemäß durch eine Kugelkupplung der eingangs genannten Art gelöst, bei welcher die Dichtung, bezogen auf eine im Kupplungszustand den Mittelpunkt der Kupplungskugel enthaltende und die Kupplungsausnehmung der Kupplungspfanne im Wesentlichen zentral durchsetzende Kupplungsachse, mit radialem Bewegungsspiel in dem sie tragenden Kupplungselement aufgenommen ist. Durch eine derartige Ausgestaltung der Kugelkupplung kann sich die Dichtung bei betriebsbedingter Verlagerung der Kupplungselemente relativ zueinander und damit einhergehender Veränderung ihres Anlagezustands an dem sie nicht tragenden Kupplungselement, etwa durch Materialabrieb an der Kupplungskugel oder/und der Kupplungspfanne, aufgrund des radialen Bewegungsspiels relativ zur dem sie tragenden Kupplungselement bewegen, was eine unerwünscht hohe Betriebslast auf die Dichtung sowie ein unerwünschtes Abheben des Kupplungselements von der Dichtung vermeidet. Die Dichtung, welche zur Sicherstellung ihrer Dichtungswirkung unter Eigenvorspannung an dem sie nicht tragenden Kupplungselement anliegt, kann somit über sehr lange Betriebsdauer mit im Wesentlichen konstanter Vorspannung und damit konstanter Dichtungswirkung im Kupplungszustand an dem sie nicht tragenden Kupplungselement anliegen.

"Dichtung" im Sinne der vorliegenden Anmeldung bezeichnet einen Dichtungskörper, welcher stabil an dem die Dichtung aufnehmenden Kupplungselement halterbar ist und an welchem ein Dichtungsbereich vorgesehen ist, der zur Anlage an dem jeweils anderen Kupplungselement ausgebildet ist. Der Dichtungsbereich kann nur ein Oberflächenabschnitt des Dichtungskörpers sein, etwa bei einer O-Ring-Dichtung, oder kann eine am Dichtungskörper vorgesehene, vorzugsweise von diesem abstehende Dichtungsgeometrie, wie etwa eine Dichtlippenanordnung sein. Wenn in dieser Anmeldung ausgesagt ist, dass die Dichtung an einem Kupplungselement anliegt, so ist damit die Anlage des Dichtungsbereiches an diesem bezeichnet.

Die oben genannte Kupplungsachse dient als Koordinatensystem zur Definition einer axialen und einer radialen Richtung sowie einer Umfangsrichtung. Mit "Kupplungsausnehmung" der Kupplungspfanne ist dabei jene Ausnehmung bezeichnet, in welche die Kupplungskugel beim Herstellen des Kupplungszustands, das heißt beim Ankuppeln, eingeführt wird, bis Anlagefläche und Gegenanlagefläche aneinander anliegen. Daher ist die Kupplungsausnehmung üblicherweise zumindest abschnittsweise sphärisch. Die Kupplungsachse sollte daher in einem idealisierten Kupplungszustand, etwa mit unverschlissenen Kupplungselementen bei Geradeausfahrt auf ebener horizontaler Fahrbahn, betrachtet werden. In diesem idealisierten Kupplungszustand enthält die Kupplungsachse den Mittelpunkt der Kupplungskugel, enthält ferner den Mittelpunkt des sphärischen Abschnitts der Kupplungsausnehmung der Kupplungspfanne und verläuft im Wesentlichen orthogonal zur Fahrbahnoberfläche.

Zwar kann grundsätzlich daran gedacht sein, lediglich einen bestimmten Abschnitt zwischen Kupplungskugel und Kupplungspfanne gegen die Umgebung abzudichten. Bevorzugt ist als Dichtung jedoch eine umlaufende Dichtung verwendet, so dass der Kupplungsanlagebereich möglichst vollständig gegen Umwelteinflüsse abgeschirmt ist.

Die umlaufende Dichtung kann in einem besonders einfachen, auf Grund seiner hohen Dichtungswirkung jedoch auch bevorzugten Fall durch einen O-Ring gebildet sein. Ebenso ist jedoch denkbar, eine umlaufende Dichtung durch Heraustrennen eines Abschnitts aus einer Dichtungsmateriallage zu erhalten, etwa in an sich bekannter Weise durch Stanzen eines Dichtungsrings aus einer Dichtungsmateriallage. Ebenso kann der Dichtungsring durch einen Urformvorgang, etwa durch Spritzformen beziehungsweise Spritzgießen, erhalten werden.

Besonders vorteilhaft kann die umlaufende Dichtung in dem sie tragenden Kupplungselement in einer ringförmigen Aufnahmeausnehmung aufgenommen sein. Dabei kann eine ausreichende Dichtungswirkung gegenüber dem die Dichtung tragenden Kupplungselement durch axiale Verformung der Dichtung in der ringförmigen Aufnahmeausnehmung bereitgestellt werden. Bevorzugt ist die Dichtung jedoch mit axialem Spiel in der Aufnahmeausnehmung aufgenommen, um ihre Beweglichkeit im radialer Richtung zu sichern, da die Dichtung lediglich als Schmutzdichtung ausreicht und es dann auf die Dichtungswirkung gegenüber dem die Dichtung tragenden Kupplungselement nicht so sehr ankommt wie auf die Dichtungswirkung gegenüber dem jeweils anderen Kupplungselement.

Grundsätzlich kann daran gedacht sein, dass axial zwischen die Aufnahmeausnehmung in axialer Richtung begrenzenden Axial-Begrenzungswandabschnitten Zwischenbauteile angeordnet sind, an welchen die Dichtung Anliegen kann. Aus Gründen einer möglichst geringen Bauteileanzahl ist es jedoch bevorzugt, wenn die Dichtung an wenigstens einer, besonders bevorzugt an beiden die Aufnahmeausnehmung in axialer Richtung begrenzenden Axial-Begrenzungswandabschnitten anliegt oder diesen, zur Erleichterung der Radialbeweglichkeit der Dichtung gegebenenfalls mit axialem Spiel, unmittelbar gegenüberliegt.

Gemäß einer möglichen Ausführungsform der Erfindung kann die Aufnahmeausnehmung in der Kupplungskugel ausgebildet sein, wobei dann zur Bereitstellung des radialen Bewegungsspiels der Durchmesser des die Aufnahmeausnehmung in radialer Richtung begrenzenden Radial-Begrenzungswandabschnitts kleiner ist als die lichte Weite der Durchgangsöffnung der in die Aufnahmeausnehmung eingelegten umlaufenden Dichtung. Dabei ist die eingelegte Dichtung im Kupplungszustand, also in ihrem Zustand axialer Verformung bei Anlage an dem sie nicht tragenden Kupplungselement zu betrachten, da in der Regel eine axiale Kompression der Dichtung unvermeidbar zu einer radialen Verformung der Dichtung führt, und zwar derart, dass die lichte Weite der Durchgangsöffnung kleiner ist als im axial unverformten Zustand.

Gemäß einer weiteren, gegenüber der zuvor genannten bevorzugten Ausführungsform, kann die Aufnahmeausnehmung in der Kupplungspfanne ausgebildet sein, wobei dann zur Sicherstellung des radialen Bewegungsspiels der Dichtung der Durchmesser des die Aufnahmeausnehmung in radialer Richtung begrenzenden Radial-Begrenzungswandabschnitts größer ist als der Außendurchmesser der in die Aufnahmeausnehmung eingelegten Dichtung. Wiederum ist aus den oben genannten Gründen die eingelegte Dichtung in ihrem axialen Verformungszustand unter Anlage an dem sie nicht tragenden Kupplungselement zu betrachten. In der hier beschriebenen Ausführungsform ist die Durchgangsöffnung der umlaufenden Dichtung von der Kupplungskugel durchsetzt, an welcher die Dichtung dichtend anliegt.

In der oben bezeichneten Aufnahmeausnehmung kann die Dichtung schwimmend aufgenommen sein, d.h. die Dichtung ist - abgesehen von Reibungskräften - in radialer Richtung kräftefrei, insbesondere vorspannungsfrei, in der Aufnahmeausnehmung aufgenommen. Ein radial zwischen der Dichtung und dem Radialbegrenzungswandabschnitt der Aufnahmeausnehmung vorhandener Spaltraum, vorzugsweise Ringspaltraum, ist also abgesehen von betriebsbedingt möglicherweise entstehenden geringfügigen und hier nicht interessierenden Schmutzablagerungen im Wesentlichen frei von weiteren Bauteilen und somit im Wesentlichen fluidgefüllt, etwa schmierstoffgefüllt, insbesondere öl- oder/und fettgefüllt, oder/und gas-, insbesondere luftgefüllt.

Eine besonders leistungsfähige Abdichtung des Kupplungsanlagebereichs gegen den Eintritt von Schmutz von außen in diesen kann bei an der Kupplungspfanne aufgenommener Dichtung dadurch erreicht werden, dass der zuvor genannte Dichtungsbereich, bei Betrachtung eines Querschnitts der Dichtung in einem an der Kupplungspfanne angeordneten, unbelasteten entkuppelten Zustand in einer, eine Mittelachse der umlaufenden Dichtung enthaltenden Schnittebene, von dem Dichtungskörper weg als Dichtlippe absteht, und zwar mit einer Erstreckungskomponente in radialer Richtung zur Mittelachse hin sowie mit einer Erstreckungskomponente in axialer Richtung von einer Mündung der Kupplungsausnehmung der Kupplungspfanne weg. Gerade die Erstreckungskomponente in axialer Richtung von der Mündung der Kupplungspfanne weg sorgt für eine schonende Möglichkeit, die Kupplungspfanne zur Herstellung einer Kupplungsverbindung unter größtmöglicher Schonung der Dichtung auf die Kupplungskugel aufzusetzen. Dabei liegt der Dichtungsbereich bei hergestelltem Kupplungszustand sehr gut an der Kupplungskugel an. Als "Mündung" der Kupplungspfanne ist in dieser Anmeldung der sich zur Umgebung hin öffnende Randbereich der Kupplungsausnehmung bezeichnet. Beim Ankuppeln wird also die Kupplungskugel durch die Mündung der Kupplungspfanne in deren Kupplungsausnehmung eingeführt.

Im Kupplungszustand fällt üblicherweise die Mittelachse der umlaufenden Dichtung mit der zuvor genannten Kupplungsachse zusammen. Die Mittelachse kann jedoch auch unabhängig von anderen Bauteilen der Kugelkupplung ermittelt werden: es handelt sich dabei in der Regel um die Symmetriemittelachse der umlaufenden Dichtung.

Eine möglichst standfeste Dichtung kann bei der hohen betriebsbedingten Last, die auf sie einwirkt, dadurch erhalten werden, dass der Dichtungsbereich in axialer Richtung näher bei dem mündungsnäheren Ende des Dichtungskörpers von diesem absteht. Vorteilhafterweise geht die mündungsnähere Stirnseite des Dichtungskörpers stufenlos in den Dichtungsbereich über. Hierdurch können unerwünschte, weil die Integrität der Dichtung gefährdende Spannungsspitzen in der Dichtung vermieden werden.

Eine besonders gute Beweglichkeit des als Dichtlippe abstehenden Dichtungsbereichs in radialer Richtung sowie in axialer Richtung kann dadurch sichergestellt werden, dass sich der Querschnitt des Dichtungskörpers in axialer Richtung zur Mündung der Kupplungspfanne hin oder von dieser weg zumindest abschnittsweise verjüngt. Diese Beweglichkeit erleichtert das Herstellen des Kupplungszustands, ohne dass eine Beschädigung der Dichtung zu besorgen wäre. Gemäß einer bevorzugten Ausführungsform kann eine für das Ankuppeln besonders günstige Beweglichkeit des Dichtungsbereichs bereitgestellt werden, indem eine radial innere Begrenzungsfläche des Dichtungskörpers bezogen auf die Mittelachse der Dichtung zumindest abschnittsweise, vorzugsweise ausgehend vom Dichtungsbereich in axialer Richtung konisch ausgebildet ist.

Eine besonders hohe Festigkeit des Dichtungskörpers und damit eine hohe Standfestigkeit der Dichtung insgesamt kann dadurch sichergestellt sein, dass eine radial äußere Begrenzungsfläche des Dichtungskörpers bezogen auf die Mittelachse der Dichtung zumindest abschnittsweise, vorzugsweise vollständig zylindrisch ist.

Falls die Dichtung radial außen umgebend ein besonders großer Spaltraum gewünscht ist, kann dies dadurch erreicht werden, dass eine radial äußere Begrenzungsfläche des Dichtungskörpers bezogen auf die Mittelachse der Dichtung zumindest abschnittsweise, vorzugsweise vollständig konisch ist.

Um zu verhindern, dass in den Kupplungsanlagebereich, etwa über einen an einem Kupplungselement vorgesehenen Schmiernippel, eingebrachtes Schmiermittel, insbesondere Schmierfett, die Dichtung aus ihrer dichtenden Anlage an ein Kupplungselement verdrängt und somit in ihrer Dichtungswirkung schwächt, kann vorgesehen sein, dass die Dichtung, insbesondere der Dichtungskörper, wenigstens einen Kanal, vorzugsweise eine Mehrzahl von Kanälen, aufweist, welcher die Dichtung in radialer Richtung durchsetzt. Dadurch kann Schmierstoff auch in den die Dichtung aufnehmenden Spaltraum gelangen und so für einen Druckausgleich der auf die Dichtung, insbesondere den Dichtungskörper, wirkenden Fluidkräfte sorgen:

Herstellungstechnisch besonders einfach können die Kanäle in der Dichtung, insbesondere im Dichtungskörper hergestellt werden, indem der wenigstens eine Kanal als axiale Vertiefung in einer der in axiale Richtung weisenden Stirnseiten ausgebildet ist.

Dabei kann die auf die umlaufende Dichtung, insbesondere auf den Dichtungskörper, wirkende Kraft dann besonders schnell ausgeglichen werden, wenn eine Mehrzahl von Kanälen vorgesehen ist. Um über die Umfangsrichtung hinweg eine möglichst gleichmäßige Kraftausgleichswirkung bereitstellen zu können, sind die Kanäle vorteilhaft wenigstens zum Teil, vorzugsweise jedoch vollständig, in Umfangsrichtung mit im Wesentlichen gleichem Abstand voneinander angeordnet.

Da die Kanäle als Strömungskanäle dienen, kann der Strömungswiderstand des Kanals dadurch reduziert werden, dass der Kanal mit möglichst geringer Länge ausgebildet wird. Dies kann konstruktiv beispielsweise dadurch realisiert sein, dass der wenigstens eine Kanal oder die Mehrzahl von Kanälen in radialer Richtung, ohne wesentliche Erstreckungskomponente in Umfangsrichtung oder in axialer Richtung verläuft.

Bei Aufnahme der Dichtung in der Kupplungspfanne ist zur Sicherstellung der dichtenden Anlage der Dichtung an der Kupplungskugel bevorzugt, dass die Dichtung an der Oberfläche des von der Kupplungspfanne wegweisenden Halbkugelabschnitts der Kupplungskugel anliegt. Dann wirkt eine betriebsbedingte axiale Relativbewegung zwischen Kupplungspfanne und Kupplungskugel in der Regel Dichtungswirkung erhöhend, so dass sich die Kupplungspfanne im Kupplungszustand, etwa bei Überfahren von Bodenunebenheiten, in axialer Richtung lediglich von der Kupplungskugel geringfügig abheben, sich dieser jedoch nicht weiter annähern kann. Durch Abheben der Pfanne von der Kupplungskugel wird die wie oben beschrieben an der Kupplungskugel anliegende Dichtung zum Äquator der Kupplungskugel hin bewegt, was die Durchgangsöffnung der umlaufenden Dichtung weitet und so aufgrund der Materialelastizität des Dichtungsmaterials für eine Erhöhung der Anlagekraft der Dichtung an die Kupplungskugel sorgt.

Weiterhin kann an einem der Kupplungselemente, bevorzugt an der Kupplungspfanne, ein Schmiernippel vorgesehen sein, mit welchem ein Schmierstoff, üblicherweise etwa Schmierfett, zwischen Kupplungspfanne und Kupplungskugel eingebracht werden kann. Dann ist es besonders bevorzugt, wenn die Dichtung zwar flüssigkeitsdicht, jedoch nicht gasdicht, an dem sie nicht tragenden Kupplungselement dichtend anliegt. Dadurch kann das Schmiermittel die zwischen Kupplungspfanne und Kupplungskugel vorhandene Luft in die Umgebung verdrängen, wird selbst jedoch durch die Dichtung zurückgehalten, so dass sie wie gewünscht zwischen Kupplungspfanne und Kupplungskugel verbleibt.

Mit der in dieser Anmeldung bezeichneten "Dichtungswirkung" einer Kupplungsdichtung ist keine "Dichtungswirkung" im herkömmlichen Sinne gemeint, sondern im Wesentlichen eine Schmutz abweisende (Dichtungs-)Wirkung, die den unerwünschten Eintritt von Schmutz in den Kupplungsanlagebereich erheblich verringert, vorzugsweise vollständig vermeidet.

Zur Erhöhung der zwischen den Kupplungselementen einführbaren Schmierstoffmenge kann an der Oberfläche wenigstens eines der Kupplungselemente eine Vertiefung ausgebildet sein.

Weiterhin kann alternativ zur oben genannten schwimmenden Lagerung der Dichtung daran gedacht sein, zur Vermeidung einer Beschädigung der Dichtung bei der Herstellung des Kupplungszustandes, also beim Ankuppeln, die Dichtung derart in der Kugelkupplung anzuordnen bzw. auszubilden, dass eine zentrierende Vorspannkraft auf sie wirkt. Zur Realisierung dieser zentrierenden Vorspannkraft kann eine Federanordnung in der Kugelkupplung vorgesehen sein, welche die zentrierende Federkraft auf die Dichtung ausübt. Als besonders geeignet haben sich dabei Mäanderfedern oder Elastomerbauteile erwiesen. Diese Federanordnung, insbesondere die genannte Mäanderfeder, kann radial zwischen der Dichtung und einem Radial-Begrenzungswandabschnitt aufgenommen sein, welcher eine die Dichtung aufnehmende Aufnahmeausnehmung in radialer Richtung begrenzt. Dadurch kann vermieden werden, dass die Kugelkupplung zur Aufnahme der Federanordnung in axialer Richtung mit größeren Abmessungen ausgebildet werden muss. Darüber hinaus benötigt gerade eine Mäanderfeder sehr wenig Bauraum und kann bequem in Radialspalte mit geringer radialer Ausdehnung aufgenommen werden.

Die vorliegende Erfindung wird im folgenden anhand der beiliegenden Zeichnungen näher erläutert werden. Es stellt dar:
- Figur 1: eine Querschnittsansicht einer ersten Ausführungsform einer er- findungsgemäßen unverschlissenen Kugelkupplung mit einem in der Kupplungspfanne aufgenommenen O-Ring,
- Figur 2: eine Querschnittsansicht einer zweiten Ausführungsform einer erfindungsgemäßen unverschlissenen Kugelkupplung mit einem in der Kupplungspfanne aufgenommenen gestanzten Dichtungsring,
- Figur 3: eine Querschnittsansicht einer dritten Ausführungsform einer er- findungsgemäßen Kugelkupplung mit Verschleißspuren mit einem in der Kupplungspfanne aufgenommenen gespritzten Dichtungs- ring,
- Figur 4: eine Querschnittsansicht einer Kupplungspfanne einer vierten Ausführungsform einer erfindungsgemäßen Kugelkupplung mit schwimmend gelagertem Dichtungsring,
- Figur 5a: eine Querschnittsansicht einer bevorzugten Dichtung für eine er- findungsgemäße Kugelkupplung,
- Figur 5b: die Dichtung von Figur 5a in der Draufsicht aus Richtung des Pfeils Vb,
- Figur 6a: die in den Figuren 5a und 5b dargestellte Dichtung in eine Kugel- pfanne schwimmend eingesetzt, im unbelasteten, entkuppelten Zustand,
- Figur 6b: die gleiche Ansicht wie in Figur 6a, jedoch während eines Ankup- pelvorgangs, und
- Figur 6c: die Dichtung von Figur 5a in der gleichen Ansicht, jedoch verse- hen mit charakteristischen Abmessungen.

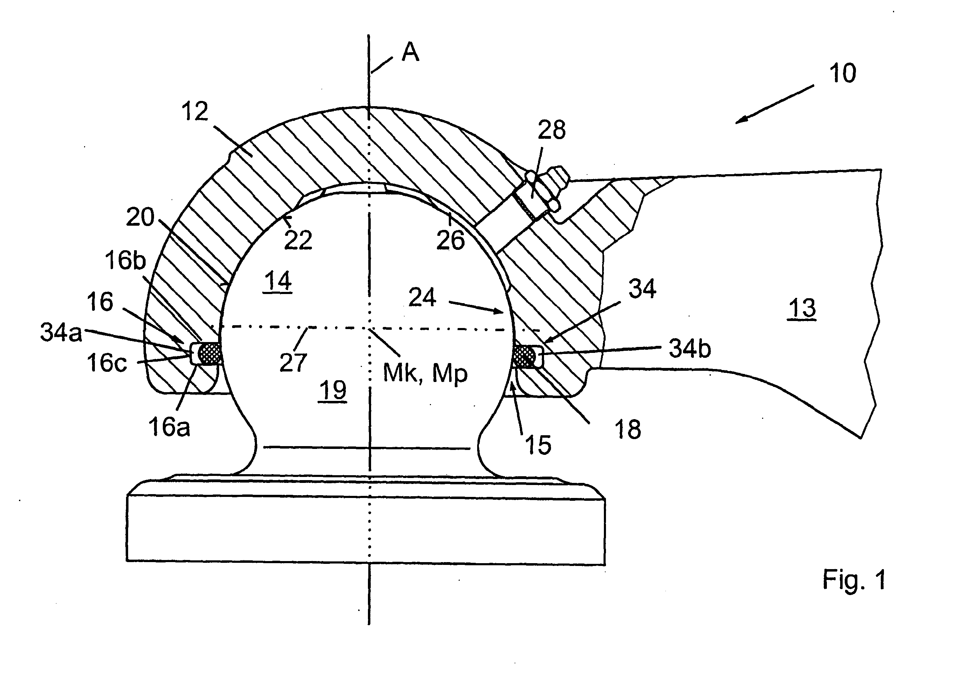

In Figur 1 ist eine erste Ausführungsform einer erfindungsgemäßen Kugelkupplung allgemein mit 10 bezeichnet. Die Kugelkupplung und 10 umfasst eine Kupplungspfanne 12, welche an einer Deichsel 13 einstückig mit dieser ausgebildet ist. Sie umfasst ferner eine Kupplungskugel 14, welche in eine teilsphärische Kupplungsausnehmung 15 der Kupplungspfanne 12 eingeführt ist. Ein Anlagebereich 20 der Kupplungskugel 14 liegt dabei an einem Gegenanlagebereich 22 der Kupplungspfanne 12 an und bildet somit in dem in Figur 1 dargestellten Kupplungszustand einen Kupplungsanlagebereich 24.

Die Kupplungsachse A enthält den Mittelpunkt Mk der Kupplungskugel 14 sowie den Mittelpunkt Mp der Kupplungsausnehmung 15 und durchsetzt die teilsphärische Kupplungsausnehmung 15 zentral. Die Kupplungsachse A in den in den Figuren 1 bis 3 gezeigten idealisierten Zuständen in der jeweiligen Zeichnungsebene und verläuft im Wesentlichen orthogonal zur nicht dargestellten ebenen horizontalen Fahrbahnoberfläche.

In der Kupplungspfanne 12 ist eine Ringnut 16 ausgebildet, welche von der Kupplungsachse A ebenfalls zentral durchsetzt ist. Die Ringnut 16 liegt in einer zur Kupplungsachse A orthogonalen Ebene. Die Ringnut 16 weist zwei einander mit Abstand gegenüberliegende, im Wesentlichen parallele Axial-Begrenzungswandabschnitte 16a und 16b auf, welche die Ringnut 16 in axialer Richtung begrenzen, und umfasst einen in axialer Richtung zwischen den Begrenzungswandabschnitten 16a und 16b gelegenen Radial-Begrenzungswandabschnitt 16c, welcher die Ringnut 16 nach radial außen begrenzt. In der Ringnut 16 ist eine Dichtung 18 in Form eines O-Rings derart aufgenommen, dass dieser unter axialer Druckverformung an den Axial-Begrenzungswandabschnitten 16a und 16b anliegt. Der O-Ring 18 kann auch mit axialem Spiel in der Ringnut aufgenommen sein.

Ebenso liegt der O-Ring 18 dichtend an der Oberfläche der Kupplungskugel 14 an, und zwar an dem von der Kupplungspfanne 12 weg weisenden Halbkugelabschnitt 19.

Es ist in Figur 1 gut zu erkennen, dass zwischen dem Außendurchmesser des O-Rings 18 und dem Radial-Begrenzungswandabschnitt 16c ein Ringspalt 34 vorhanden ist, welcher in dem in Figur 1 gezeigten Beispiel über den Umfang der Ringnut 16 gleichmäßig ausgebildet ist. Zu erkennen ist ein Ringspaltabschnitt 34a auf der deichselferneren Seite der Kugelkupplung sehen und ein in radialer Richtung im Wesentlichen gleich großer Ringspaltabschnitt 34b auf der deichselnäheren Seite der Kugelkupplung. Dieser Ringspalt 34 ist fluidgefüllt, also mit Umgebungsluft oder/und mit Schmierstoff, insbesondere Schmierfett, gefüllt. Die schwimmend gelagerte Dichtung 18 kann sich daher erforderlichenfalls in radialer Richtung in der Ringnut 16 relativ zu der sie aufnehmenden Kupplungspfanne 12 bewegen.

Anzumerken ist, dass der Gegenanlagebereich 22 der Kupplungskugel 12 eine Vertiefung 26 aufweist, welche als Schmierfettspeicher dient. Über einen in der Kupplungspfanne 12 vorgesehenen Schmiernippel 28 kann Schmierfett zwischen den Anlagebereich 20 und den Gegenanlagebereich 22, insbesondere in die Vertiefung 26, eingepresst werden.

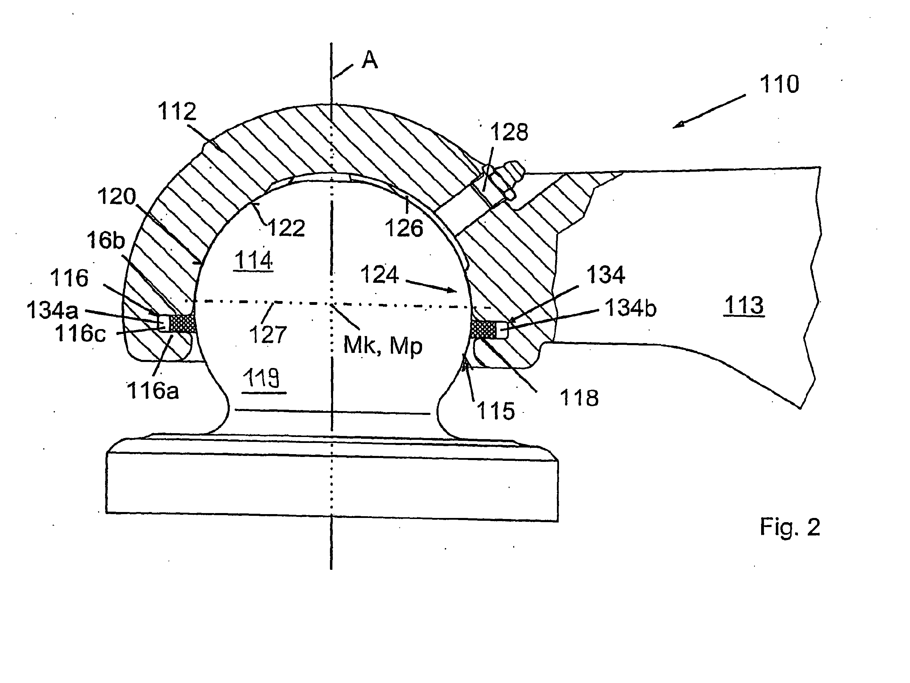

In Figur 2 ist eine zweite Ausführungsform einer erfindungsgemäßen Kugelkupplung dargestellt. Gleiche Bauteile wie in der ersten Ausführungsform sind in der zweiten Ausführungsform mit gleichen Bezugszeichen bezeichnet, jedoch erhöht um die Zahl 100. Die zweite Ausführungsform wird lediglich insoweit beschrieben werden, als sie sich von der ersten unterscheidet. Ansonsten wird ausdrücklich auf die obige Beschreibung der ersten Ausführungsform verwiesen.

Die zweite Ausführungsform unterscheidet sich von der in Figur 1 gezeigten ersten Ausführungsform lediglich darin, dass die Dichtung 118 der zweiten Ausführungsform ein gestanzter Dichtungsring ist, welcher aus einer Dichtungsmateriallage ausgestanzt ist.

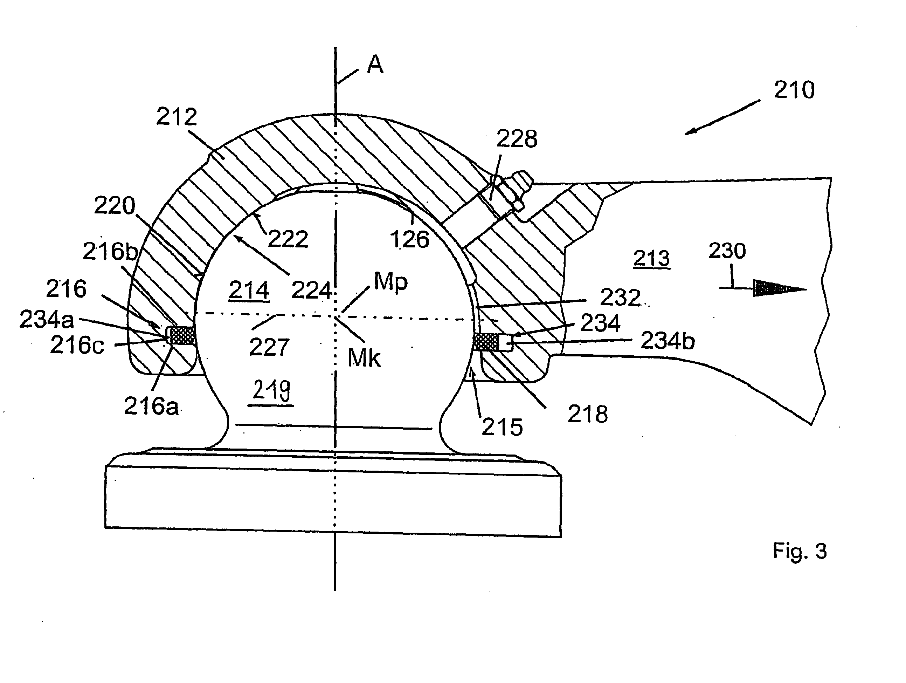

In Figur 3 ist eine dritte Ausführungsform einer erfindungsgemäßen Kugelkupplung dargestellt. Gleiche Bauteile wie in der ersten und der zweiten Ausführungsform sind in Figur 3 mit den gleichen Bezugszeichen versehen, jedoch erhöht um die Zahl 200 beziehungsweise 100. Die in Figur 3 dargestellte dritte Ausführungsform wird im folgenden nur insoweit erläutert, als sie sich vor den ersten beiden Ausführungsformen unterscheidet, auf deren ausführliche Erläuterung ansonsten ausdrücklich verwiesen wird.

Die Dichtung 218 von Figur 3 ist eine durch Spritztechnik hergestellte Dichtung.

In Figur 3 ist die Kugelkupplung 210 nach längerer Betriebsdauer dargestellt, so dass aufgrund von Materialabrieb der Anlagebereich 220 und der Gegenanlagebereich 222 keine übereinstimmenden Durchmesser mehr aufweisen, was dazu führt, dass dann, wenn eine Relativzugkraft in Richtung des Pfeils 230 zwischen der Kupplungskugel 214 und der Kupplungspfanne 212 wirkt, die beiden Kupplungselemente längs eines im Vergleich zu den zuvor gezeigten Ausführungsformen kleineren Kupplungsanlagebereichs 224 anliegen und ein Spalt 232 zwischen dem Anlagebereich 220 und dem Gegenanlagebereich 222 besteht. Der Kupplungsanlagebereich 224 ist in diesem Fall eine Schmiegezone, in welcher der Anlagebereich 220 und der Gegenanlagebereich 222 aufgrund ihrer trotz des Verschleißes sehr ähnlichen Durchmesser flächig aneinander anliegen. Die Mittelpunkte Mk der Kupplungskugel 214 und Mp der Kupplungspfanne 212 fallen jedoch auseinander.

Aufgrund der in radialer Richtung schwimmend gelagerten Dichtung 218 kann die Dichtung 218 die durch Materialabrieb im Kupplungszustand geänderten Relativpositionen der Kupplungselemente 212 und 214 durch eine radiale Relativbewegung relativ zur Ringnut 216 der Kupplungspfanne 212 ausgleichen, so dass eine zumindest lokal erhöhte Belastung der Dichtung 218 vermieden wird. In Figur 3 ist somit zu erkennen, dass der deichselfernere Ringspaltabschnitt 234a in radialer Richtung kleiner ist als der deichselnähere Ringspaltabschnitt 234b. Dadurch kann an dem Dichtungsanlageort der Dichtung 218 an der Kupplungskugel 214 unterhalb des Äquators 227 der Kupplungskugel 214 der Anlagedruck, mit welchem die Dichtung 218 an der Kupplungskugel 214 anliegt, und somit die Dichtungswirkung der Dichtung 218 über eine sehr lange Betriebszeit im Wesentlichen konstant gehalten werden.

Die Dichtung 218 ist mit ihren Abmessungen, insbesondere ihrem Öffnungsdurchmesser im unverformten Zustand, Ihrem Dichtungsmaterial und ihrem Dichtungsanlageort an der Kupplungskugel 214 so gewählt, dass Schmierfett, welches durch den Schmiernippel 228 zwischen die Kupplungskugel 214 und die Kupplungspfanne 212 eingefüllt wird, von der Dichtung 218 zurückgehalten wird, das eintretende Schmierfett jedoch eventuell zwischen der Kupplungskugel 214 und der Kupplungspfanne 212 vorhandene Luft über die Dichtung 218 hinweg in die Umgebung verdrängen kann. Diese Bemessung der Dichtungen gilt im Übrigen für alle in der vorliegenden Anmeldung dargestellten Ausführungsformen.

In den Figuren 1 bis 3 nicht dargestellt ist die mögliche Aufnahme einer Mäanderfeder oder eines Elastomerbauteils in den Ringspalten 34, 134 bzw. 234, welche für eine Zentrierung der jeweiligen Dichtung 18, 118 und 218 bezüglich der Kupplungsachse A sorgt. Diese bewirkt insbesondere, dass die Dichtung 18, 118, 218 im entkuppelten Zustand der Kugelkupplung über den Umfang der Kupplungsausnehmung 15, 115, 215 hinweg im Wesentlichen das gleiche radiale Maß in die Kupplungsausnehmung 15, 115, 215 vorsteht, so dass sie beim Ankuppeln der Kupplungspfanne 12, 112, 212 an die Kupplungskugel 14, 114, 214 von letzterer leicht in die Ringnut 16, 116, 216 hinein verdrängt werden kann, ohne dass eine Quetschung der Dichtung wegen übermäßigen Überstandes zu befürchten ist.

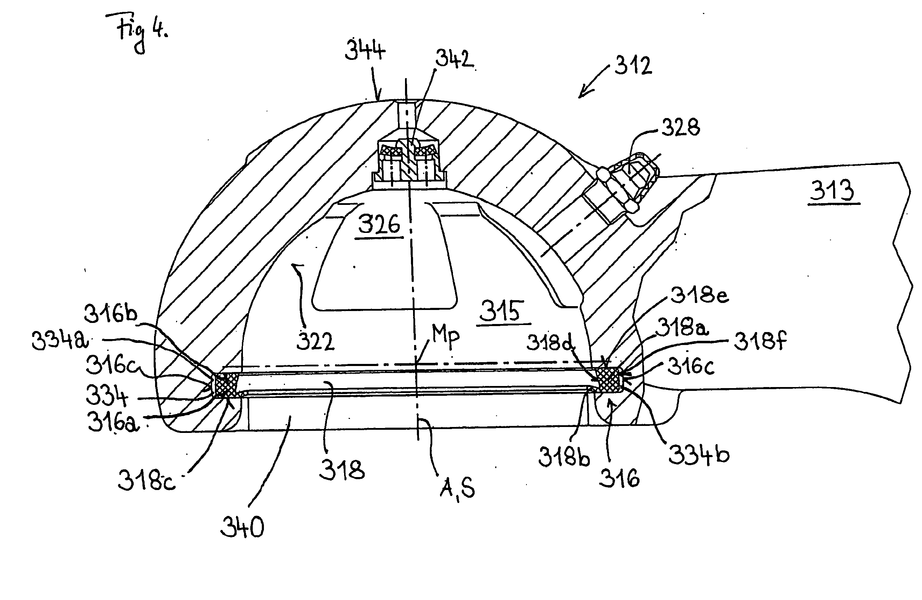

In Figur 4 ist eine Kugelpfanne einer vierten Ausführungsform einer erfindungsgemäßen Kugelkupplung dargestellt.

Die in Figur 4 gezeigte Ausführungsform wird nur insofern erläutert, als sie sich von den vorhergehenden Ausführungsformen unterscheidet. Gleiche Bauteile wie in den Ausführungsformen der Figuren 1 bis 3 sind mit gleichen Bezugszeichen versehen, jedoch erhöht um die Zahl 300 in Bezug auf die erste Ausführungsform in Figur 1, um die Zahl 200 in Bezug auf die zweite Ausführungsform in Figur 2 und erhöht um die Zahl 100 in Bezug auf die dritte Ausführungsform in Figur 3. Zur ausführlichen Beschreibung der bereits bekannten Bauteile wird ausdrücklich auf die Beschreibung der Figuren 1 bis 3 verwiesen.

In der in Figur 4 gezeigten Ausführungsform fällt eine Mittelachse S der in der Ringnut 316 angeordneten umlaufenden Elastomerdichtung mit der Kupplungsachse A zusammen. Dies gilt dann, wenn die Dichtung 318, wie in Figur 4 dargestellt, zentriert in der Ringnut 316 aufgenommen ist, was jedoch aufgrund der schwimmenden Lagerung der Dichtung 318 in der Ringnut 316 Zufall ist.

Die Mittelachse S der Dichtung 318 ist eine Rotationssymmetrieachse der Dichtung 318. Die Querschnittsebene des in Figur 4 dargestellten Querschnitts enthält die Mittelachse S der Dichtung 318 und liegt in der Zeichenebene von Figur 4.

Die Dichtung 318 umfasst, bei Betrachtung des Querschnitts von Figur 4, einen Dichtungskörper 318a und einen als Dichtlippe vom Dichtungskörper 318a abstehenden Dichtungsbereich 318b.

Die zur Mündung 340 der Kupplungsausnehmung 315 in axialer Richtung weisende Stirnseite 318c der Dichtung 318 geht stufenlos vom Dichtungskörper 318a zum Dichtungsbereich 318b über. Daher steht in dem in Figur 4 gezeigten Ausführungsbeispiel der Dichtungsbereich 318b vom Dichtungskörper 318a an dessen mündungsnäherem axialen Ende von diesem ab. Die Abstehrichtung des Dichtungsbereichs 318b hat dabei in jedem Querschnitt, dessen Querschnittsebene die Mittelachse S enthält, eine Erstreckungskomponente in radialer Richtung zur Mittelachse S hin und in axialer Richtung von der Mündung 340 weg, also in die Kupplungsausnehmung 315 hinein. Diese Erstreckungsrichtung erleichtert das Aufsetzen der in Figur 4 gezeigten Kupplungspfanne 312 auf eine nicht dargestellte Kupplungskugel erheblich.

Um den als Dichtlippe vom Dichtungskörper 318a abstehenden Dichtungsbereich 318b gerade beim Ankuppeln der Kupplungspfanne 312 an eine Kupplungskugel ausreichend Bewegungsmöglichkeit zu sichern, ist die den Dichtungskörper 318a nach radial innen begrenzende Wandung 318d konisch ausgebildet, und zwar mit einem sich zur Mündung 340 der Kupplungsausnehmung 315 hin aufweitenden Öffnungswinkel. Dies bedeutet, dass sich die radiale Dicke des Dichtungskörpers 318a in axialer Richtung von dessen mündungsfernerer Stirnseite 318e zu dessen mündungsnäherer Stirnseite 318c hin verringert.

Die den Dichtungskörper 318a und damit die Dichtung 318 nach radial außen begrenzende Begrenzungswand 318f ist dagegen bezogen auf die Mittelachse S der Dichtung 318 im Wesentlichen zylindrisch ausgebildet.

Die axiale Dicke der Dichtung 318 im unbelasteten Zustand, also der axiale Abstand der beiden Stirnseiten 318c und 318e ist geringfügig kleiner als der axiale Abstand der beiden Axialbegrenzungsflächen 316a und 316b der Radialnut 316, so dass die Dichtung 318 in der Radialnut 316 mit geringfügigem axialen Spiel bereits durch sehr geringe in radialer Richtung wirkende Kräfte in eben dieser Richtung verschieblich ist.

Der Dichtungsbereich 318b liegt mit seinem vom Dichtungskörper 318a fernliegenden Längsende im Kupplungszustand an der Kupplungskugel an.

Es wird außerdem noch verwiesen auf ein Ventil 342, durch welches in den Kupplungsanlagebereich 322 über den Schmiernippel 328 eingeführtes Schmierfett austreten kann, um einen Niederhalteranlagebereich 344 der Kugelkupplung zu schmieren. Das Ventil 342 lässt nur eine Schmiermittelströmung von der Kupplungsausnehmung 315 zum Niederhalteranlagebereich 344 durch und sperrt in die entgegengesetzte Strömungsrichtung.

Der Ringspalt 334 ist in dem in Figur 4 gezeigten Beispiel entweder mit Luft gefüllt oder teilweise oder vollständig mit einem durch den Schmiernippel 328 in den Kupplungsanlagebereich 322 eingeführten Schmiermittel, insbesondere Schmierfett, gefüllt.

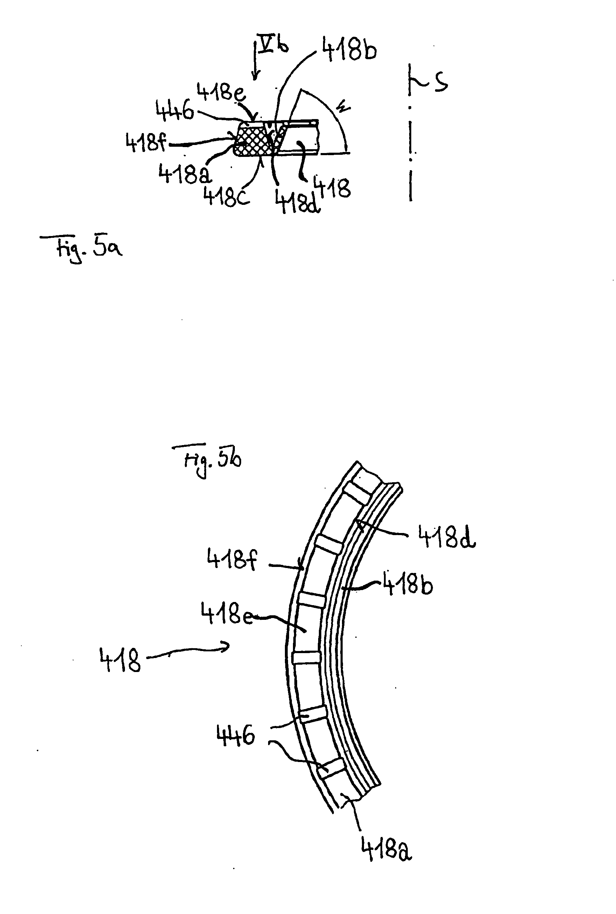

In Figur 5a ist eine Dichtung 418 dargestellt, welche alternativ zu den in den Figuren 1 bis 4 gezeigten Dichtungen x18 mit x = 0, 1, 2 oder 3 verwendet werden kann. Die in den Figuren 5a bis 6b gezeigte Dichtung 418 wird nur insofern erläutert, als sie sich von der in Figur 4 gezeigten Dichtung 318 unterscheidet, auf deren Beschreibung ansonsten ausdrücklich verwiesen wird. Gleiche Bauteile und Bauteilabschnitte wie in Figur 4 sind in den Figuren 5a bis 6b mit gleichen Bezugszeichen wie in Figur 4 versehen, jedoch erhöht um die Zahl 100.

In Figur 5a ist zu erkennen, dass der als Dichtlippe vom Dichtungskörper 418a abstehende Dichtungsbereich 418b mit der Ebene der Tangentialebene an die mündungsnähere Stirnseite 418c der Dichtung 418 einen Winkel W einschließt. Der Winkel W liegt vorteilhafterweise in einem Bereich zwischen etwa 45° und etwa 70°.

Überdies sind auf der mündungsferneren Stirnseite 418e der Dichtung 418 bzw. des Dichtungskörpers 418a Radialkanäle 446 ausgebildet. Diese Radialkanäle führen von der radial inneren Begrenzungsfläche 418d bis zur radial äußeren Begrenzungsfläche 418f und durchsetzen so den Dichtungskörper 418a in radialer Richtung.

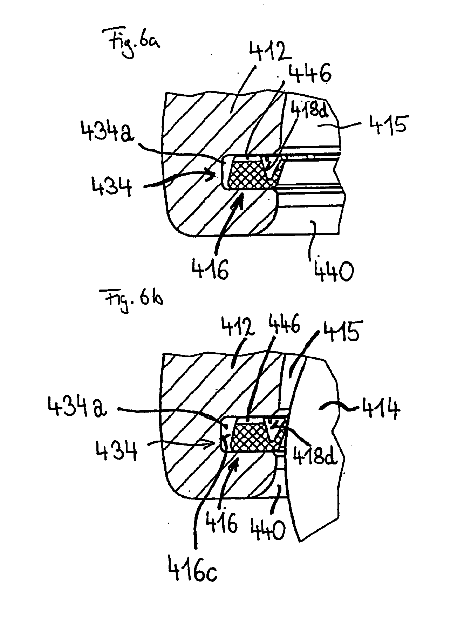

Wie in Figur 5b zu erkennen ist, sind mehrere Radialkanäle 446 in Umfangsrichtung mit gleichem Abstand voneinander über die gesamte Dichtung 418 verteilt angeordnet. Die Bedeutung dieser Radialkanäle 446 wird nachfolgend anhand der Figuren 6a und 6b erläutert.

Weiterhin ist zu erkennen, das sowohl die radial innere Begrenzungsfläche 418d des Dichtungskörpers 418a als auch die radial äußere Begrenzungsfläche 418f des Dichtungskörpers 418a konisch ausgebildet sind, und zwar die radial innere Begrenzungsfläche 418d mit einem Öffnungswinkel, welcher sich im fertig montierten Zustand der Dichtung 418 zur Mündung 440 einer Kupplungsausnehmung 415 verjüngt und im Falle der radial äußeren Begrenzungsfläche 418f mit einem Öffnungswinkel, welcher sich zur selben Mündung hin aufweitet, so dass die radiale Dicke des Dichtungskörpers 418a vom mündungsferneren (mündungsfernere Stirnseite 418e) Axialende, welches die als axiale Vertiefungen ausgebildeten Radialkanäle 446 aufweist, zum mündungsnäheren Axialende (mündungsnähere Stirnseite 418c) hin zunimmt. Somit sind die Radialkanäle 446 an der Stelle ausgebildet, welche die geringste Dicke aufweist, so dass die als Strömungskanäle wirkenden Radialkanäle 446 einen möglichst geringen Strömungswiderstand bieten.

In den Figuren 6a und 6b ist die Dichtung 418 der Figuren 5a und 5b im montierten Zustand an einer Kupplungspfanne 412 angebracht dargestellt.

Dabei ist zu erkennen, dass die Radialkanäle 446 den Ringspalt 434 mit dem Bereich der Kupplungsausnehmung 415 verbinden. Dadurch kann ein in den Bereich der Kupplungsausnehmung 415 eingebrachtes Schmiermittel, welches durch den von ihm auf die radial innere Begrenzungsfläche 418d ausgeübten Druck droht, die Dichtung 418 radial aufzuweiten und damit in ihrer Dichtungswirkung zu beeinträchtigen, über die Radialkanäle 446 in den Ringspalt 334 strömen, und so für einen Druckausgleich sorgen, welcher die unerwünschte radiale Aufweitung der Dichtung 418 verhindert. Die Dichtung 418 liegt somit stets sicher an der Kupplungskugel 414 an.

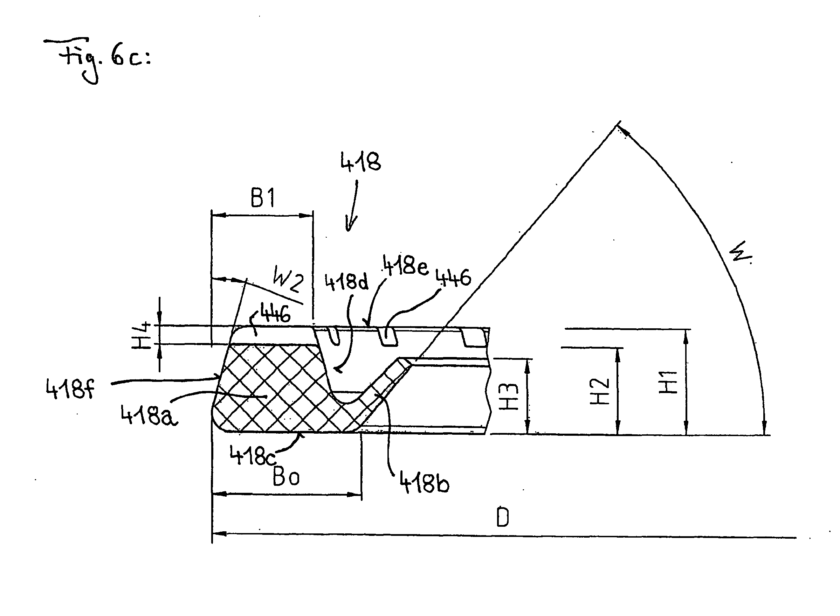

Nachfolgend werden anhand der Figur 6c charakteristische Abmessungen der in den Figuren 5a bis einschließlich 6c dargestellten bevorzugten Ausführungsform der Dichtung beschrieben werden:

Mit "D" ist der Außendurchmesser der Dichtung bezeichnet, mit "B0" die Dicke des mündungsnäheren axialen Endes des Dichtungskörpers 418a, gemessen von dessen radial äußerem Rand bis zum Übergang vom Dichtungskörper 418a zu dem von diesem abstehenden Dichtungsbereich 418b.

Mit "B1" ist die Dicke des mündungsferneren axialen Endes des Dichtungskörpers bezeichnet, gemessen von dessen radial äußerem Rand bis zum Übergang der mündungsferneren Stirnseite 418e des Dichtungskörpers 418a zu dessen radial innerer Begrenzungsfläche 418d.

Mit "H1" ist die axiale Dicke des Dichtungskörpers 418a bezeichnet, gemessen von der mündungsnäheren Stirnseite 418c des Dichtungskörpers 418a zu dessen mündungsfernerer Stirnseite 418e.

Mit "H2" ist die axiale Dicke des massiven Dichtungskörpers 418a bezeichnet, gemessen von dessen mündungsnäherer Stirnseite 418c bis zum Grund des Radialkanals 446.

Mit "H3" ist die axiale Höhe des zur Dichtung anliegenden Längsendes des Dichtungsbereichs 418b über eine zur Mittelachse der Dichtung orthogonalen Tangentialebene an die mündungsnähere Stirnseite 418c des Dichtungskörpers 418a bezeichnet.

Mit "W" ist der Winkel bezeichnet, unter welchem der Dichtungsbereich 418b von der Ebene der mündungsnäheren Stirnseite 418c vom Dichtungskörper 418a absteht. Sofern die mündungsnähere Stirnseite 418c nicht eben ist, ist zur Ermittlung des Winkels W eine zur Mittelachse der Dichtung orthogonale Tangentialebene an die mündungsnähere Stirnseite heranzuziehen.

Mit "H4" ist schließlich die Tiefe des Radialkanals 446 bezeichnet, so dass H1 sich aus der Summe von H2 und H4 zusammensetzt.

Mit "W2" ist der Winkel bezeichnet, welchen die radial äußere Begrenzungsfläche 418f des Dichtungskörpers 418a in der Querschnittsdarstellung von Figur 6c mit einer zur Mittelachse der Dichtung parallelen Tangente an die radial äußere Begrenzung des Dichtungskörpers 418a einschließt.

Für diese charakteristischen Abmessungen gelten folgende bevorzugte Dimensionierungsvorschriften zur Erzielung besonders guter Dichtergebnisse:
B0 beträgt etwa 8% bis 11 % des Durchmessers D.
W beträgt etwa 45° bis etwa 70°.
W2 beträgt etwa 10° bis etwa 20°.
H1 beträgt etwa 5% bis etwa 8% des Durchmessers D.
H3 beträgt etwa 70% bis 85% der axialen Gesamthöhe H1 des Dichtungskörpers 418a.

Die axiale Tiefe des Radialkanals 446 beträgt etwa 15% bis etwa 25% der axialen Gesamthöhe H1 des Dichtungskörpers 418a.

Es wird ausdrücklich darauf hingewiesen, dass jedes technische Merkmal, welches lediglich in einer Ausführungsform der Figuren 1 bis 6c der vorliegenden Erfindung dargestellt ist, auch in jeder beliebigen anderen Ausführungsform zum Einsatz kommen kann.

Die Anmelderin behält sich vor, jeweils gesonderten Schutz für die in dieser Anmeldung dargestellten und beschriebenen Dichtungen zu beanspruchen.

## Patentansprüche

1. Kugelkupplung zur Kupplung eines Zugfahrzeugs mit einem Nachlauffahrzeug, umfassend eine mit einem der Fahrzeuge: Zugfahrzeug oder Nachlauffahrzeug, verbundene oder verbindbare Kupplungskugel (14; 114; 214; 414) und eine mit dem jeweils anderen Fahrzeug verbundene oder verbindbare Kupplungspfanne (12; 112; 212; 312; 412), welche mit der Kupplungskugel (14; 114; 214; 414) kuppelbar ist, wobei genauer die Kupplungskugel (14; 114; 214; 414) einen konvexen Anlagebereich (20; 120; 220) aufweist und die Kupplungspfanne (12; 112; 212; 312; 412) in einer Kupplungsausnehmung (15; 115; 215; 315; 415) einen konkaven Gegenanlagebereich (22; 122; 222; 322) aufweist, welche im Kupplungszustand der Kugelkupplung unter Bildung eines Kupplungsanlagebereichs (24; 124; 224) aneinander anliegen und zwischen welchen die Kupplungskugel (14; 114; 214; 414) und die Kupplungspfanne (12; 112; 212; 312; 412) bei Entkupplung der Kugelkupplung trennbar sind,
wobei ferner ein Kupplungselement: Kupplungspfanne (12; 112; 212; 312; 412) oder Kupplungskugel (14; 114; 214; 414), eine Dichtung (18; 118; 218; 318; 418) trägt, welche im Kupplungszustand den Kupplungsanlagebereich (24; 124; 224) gegen die Umgebung abdichtet,
**dadurch gekennzeichnet, dass** die Dichtung (18; 118; 218; 318; 418), bezogen auf eine im Kupplungszustand den Mittelpunkt der Kupplungskugel (14; 114; 214; 414) enthaltende und die Kupplungsausnehmung (15; 115; 215; 315; 415) der Kupplungspfanne (12; 112; 212; 312; 412) im Wesentlichen zentral durchsetzende Kupplungsachse (A), mit radialem Bewegungsspiel in dem sie tragenden Kupplungselement (12; 112; 212; 312; 412) aufgenommen ist.

2. Kugelkupplung nach Anspruch 1,
**dadurch gekennzeichnet, dass** die Dichtung (18; 118; 218; 318; 418) eine umlaufende Dichtung (18; 118; 218; 318; 418) ist.

3. Kugelkupplung nach Anspruch 2,
**dadurch gekennzeichnet, dass** die Dichtung (18; 118; 218; 318; 418) einen O-Ring (18) umfasst.

4. Kugelkupplung nach einem der Ansprüche 2 bis 3,
**dadurch gekennzeichnet, dass** die Dichtung (18; 118; 218; 318; 418) einen durch einen Urformvorgang, vorzugsweise durch Spritzen, gebildeten Dichtring (218) umfasst.

5. Kugelkupplung nach einem der vorhergehenden Ansprüche,
**dadurch gekennzeichnet, dass** die Dichtung (18; 118; 218; 318; 418) einen Dichtungskörper (318a; 418a), welcher an dem die Dichtung (18; 118; 218; 318; 418) aufnehmenden Kupplungselement (12; 112; 212; 312; 412) halterbar ist, mit einem daran vorgesehenen Dichtungsbereich (318b; 418b) umfasst, welcher zur Anlage an das jeweils andere Kupplungselement (12; 112; 212; 312; 412) ausgebildet ist.

6. Kugelkupplung nach einem der Ansprüche 2 bis 5,
**dadurch gekennzeichnet, dass** die Dichtung (18; 118; 218; 318; 418) in einer ringförmigen Aufnahmeausnehmung (16; 116; 216; 316; 416), vorzugsweise unter axialer Verformung aufgenommen ist.

7. Kugelkupplung nach Anspruch 6,
**dadurch gekennzeichnet, dass** die Dichtung (18; 118; 218; 318; 418) an wenigstens einer, vorzugsweise an beiden die Aufnahmeausnehmung (16; 116; 216) in axialer Richtung begrenzenden Begrenzungswandabschnitten (16a, 16b; 116a, 116b; 216a, 216b; 316a, 316b; 416a, 416b) anliegt oder diesen mit axialem Spiel unmittelbar gegenüberliegt.

8. Kugelkupplung nach Anspruch 6 oder 7,
**dadurch gekennzeichnet, dass** die Aufnahmeausnehmung (16; 116; 216; 316; 416) in der Kupplungspfanne (12; 112; 212; 312; 412) ausgebildet ist, wobei der Durchmesser des die Aufnahmeausnehmung (16; 116; 216; 316; 416) in radialer Richtung begrenzenden Begrenzungswandabschnitts (16c; 116c; 216c; 316c; 416c) größer ist als der Außendurchmesser der in die Aufnahmeausnehmung (16; 116; 216; 316; 416) eingelegten Dichtung (18; 118; 218; 318; 418).

9. Kugelkupplung nach Anspruch 8, unter Einbeziehung der Ansprüche 2 und 5,
**dadurch gekennzeichnet, dass** der Dichtungsbereich (318b; 418b), bei Betrachtung eines Querschnitts der Dichtung (318; 418) in einem an der Kupplungspfanne (312; 412) angeordneten, unbelasteten entkuppelten Zustand in einer, eine Mittelachse (S) der umlaufenden Dichtung (318; 418) enthaltenden Schnittebene, von dem Dichtungskörper (318a; 418a) weg als Dichtlippe absteht, und zwar mit einer Erstreckungskomponente in radialer Richtung zur Mittelachse (S) hin sowie mit einer Erstreckungskomponente in axialer Richtung von der Mündung (340; 440) der Kupplungspfanne (312; 412) weg.

10. Kugelkupplung nach Anspruch 9,
**dadurch gekennzeichnet, dass** der Dichtungsbereich (318b; 418b) in axialer Richtung näher bei dem mündungsnäheren Ende (bei 318c; bei 418c) des Dichtungskörpers (318a; 418a) von diesem absteht.

11. Kugelkupplung nach einem der vorhergehenden Ansprüche,
**dadurch gekennzeichnet, dass** die Dichtung (418), insbesondere der Dichtungskörper (418a), wenigstens einen Kanal (446), vorzugsweise eine Mehrzahl von Kanälen (446), aufweist, welcher die Dichtung (418) in radialer Richtung durchsetzt.

12. Kugelkupplung nach Anspruch 11,
**dadurch gekennzeichnet, dass** der wenigstens eine Kanal (446) als axiale Vertiefung in einer der in axialer Richtung weisenden Stirnseiten (418e) der Dichtung (418), insbesondere des Dichtungskörpers (418a), ausgebildet ist.

13. Kugelkupplung nach Anspruch 11 oder 12, unter Einbeziehung des Anspruchs 2,
**dadurch gekennzeichnet, dass** die umlaufende Dichtung (418) eine Mehrzahl von Kanälen (446) aufweist, welche in Umfangsrichtung wenigstens zum Teil, vorzugsweise vollständig, mit im Wesentlichen gleichem Abstand voneinander angeordnet sind.

14. Kugelkupplung nach einem der vorhergehenden Ansprüche,
**dadurch gekennzeichnet, dass** die Dichtung (18; 118; 218; 318; 418) in der Kupplungspfanne (12; 112; 212; 312; 412) aufgenommen ist und an der Oberfläche des von der Kupplungspfanne (12; 112; 212; 312; 412) wegweisenden Halbkugelabschnitts (19; 119; 219) der Kupplungskugel (14; 114; 214; 414) anliegt.

15. Kugelkupplung nach einem der vorhergehenden Ansprüche,
**dadurch gekennzeichnet, dass** die in einem Kuppungselement (12; 112; 212; 312; 412) aufgenommene Dichtung (18; 118; 218; 318; 418) flüssigkeitsdicht, jedoch nicht gasdicht an dem jeweils anderen Kupplungselement (14; 114; 214; 414) anliegt.

16. Kugelkupplung nach einem der vorhergehenden Ansprüche, unter Einbeziehung des Anspruchs 6,
**dadurch gekennzeichnet, dass** die Dichtung (18; 118; 218; 318; 418) schwimmend in der Aufnahmeausnehmung (16; 116; 216; 316; 416) aufgenommen ist.

17. Kugelkupplung nach einem der Ansprüche 1 bis 15,
**dadurch gekennzeichnet, dass** auf die Dichtung eine zentrierende Vorspannkraft wirkt.

## Claims

1. A ball coupling for coupling a towing vehicle to a trailer vehicle, comprising a coupling ball (14;114;214;414) which is connected or can be connected to one of the vehicles: towing vehicle or trailer vehicle, and a coupling socket (12;112;212;312;412) which is connected or can be connected to the respective other vehicle and which can be coupled to the coupling ball (14;114;214; 414), wherein more precisely the coupling ball (14;114;214;414) has a convex contact area (20;120;220) and in a coupling recess (15;115;215;315;415) the coupling socket (12;112;212;312;412) has a concave opposite-contact area (22;122;222;322), which in the coupled condition of the ball coupling bear against one another to form a coupling contact area (24;124;224) and between which the coupling ball (14;114;214;414) and the coupling socket (12;112;212;312;412) can be separated when the ball coupling is uncoupled,
wherein further one coupling element: coupling socket (12;112;212;312;412) or coupling ball (14;114;214;414) has a seal (18;118;218;318;418) which in the coupled condition seals the coupling contact area (24;124;224) from the environment,
**characterised in that**, in relation to a coupling axis (A) which in the coupled condition contains the centre point of the coupling ball (14;114;214;414) and which passes substantially centrally through the coupling recess (15;115;215;315;415) of the coupling socket (12;112;212;312;412), the seal (18;118;218;318;418) is accommodated with radial play in the coupling element (12;112;212;312;412) carrying it.

2. A ball coupling according to Claim 1,
**characterised in that** the seal (18;118;218;318;418) is a circumferential seal (18;118;218;318;418).

3. A ball coupling according to Claim 2,
**characterised in that** the seal (18;118;218;318;418) comprises an O-ring (18).

4. A ball coupling according to one of Claims 2 to 3,
**characterised in that** the seal (18;118;218;318;418) comprises a sealing ring (218) formed by a forming process, preferably by injection moulding.

5. A ball coupling according to any one of the preceding Claims,
**characterised in that** the seal (18;118;218;318;418) comprises a seal body (318a;418a) which can be mounted on the coupling element (12;112;212;312;412) accommodating the seal (18;118;218;318;418), with a sealing area (318b;418b) provided thereon which is designed to bear against the respective other coupling element (12;112;212;312;412).

6. A ball coupling according to any one of Claims 2 to 5,
**characterised in that** the seal (18;118;218;318;418) is accommodated in an annular accommodating recess (16;116;216;316;416), preferably with axial deformation.

7. A ball coupling according to Claim 6,
**characterised in that** the seal (18;118;218;318;418) bears against at least one, preferably against both, boundary wall portions (16a,16b;116a,116b;216a,216b;316a,316b;416a,416b) bounding the accommodating recess (16;116;216) in an axial direction, or is situated directly opposite thereto with axial clearance.

8. A ball coupling according to Claim 6 or 7,
**characterised in that** the accommodating recess (16;116;216;316;416) is formed in the coupling socket (12;112;212;312;412), wherein the diameter of the boundary wall portion (16c;116c;216c;316c;416c) bounding the accommodating recess (16;116;216;316;416) in radial direction is greater than the outer diameter of the seal (18;118;218;318;418) inserted into the accommodating recess (16; 116; 216; 316; 416) .

9. A ball coupling according to Claims 8, with reference to Claims 2 and 5,
**characterised in that**, when viewing a cross-section of the seal (318;418) in an unloaded uncoupled condition arranged on the coupling socket (312;412) in a sectional plane containing the centre axis (S) of the circumferential seal (318;418), the sealing area (318b;418b) projects away from the seal body (318a;418a) as a sealing lip, that is with an extension component in a radial direction towards the centre axis (S) and also with an extension component in an axial direction away from the mouth (340;440) of the coupling socket (312;412).

10. A ball coupling according to Claim 9,
**characterised in that** the sealing area (318b;418b) projects in an axial direction closer to the end (at 318c; at 418c) nearer the mouth of the seal body (318a;418a) away from the latter.

11. A ball coupling according to any one of the preceding Claims,
**characterised in that** the seal (418), in particular the seal body (418a), has at least one channel (446), preferably a plurality of channels (446), which pass/passes through the seal (418) in a radial direction.

12. A ball coupling according to Claim 11,
**characterised in that** the at least one channel (446) is in form of an axial depression in one of the end faces (418e) of the seal (418) facing in an axial direction, in particular of the seal body (418a).

13. A ball coupling according to Claim 11 or 12, with reference to Claim 2,
**characterised in that** the circumferential seal (418) has a plurality of channels (446) which in a peripheral direction are arranged at least partly, preferably entirely, at substantially an equal distance from one another.

14. A ball coupling according to any one of the preceding Claims,
**characterised in that** the seal (18;118;218;318;418) is accommodated in the coupling socket (12;112;212;312;412) and bears against the surface of the hemispherical portion (19;119;219) of the coupling ball (14;114;214;414) facing away from the coupling socket (12;112;212; 312;412).

15. A ball coupling according to any one of the preceding Claims,
**characterised in that** the seal (18;118;218;318;418) accommodated in a coupling element (12;112;212;312;412) bears fluid-tightly but not gastightly against the respective other coupling element (14;114;214;414).

16. A ball coupling according to any one of the preceding Claims, with reference to Claim 6,
**characterised in that** the seal (18;118;218;318;418) is accommodated floating in the accommodating recess (16;116;216;316;416).

17. A ball coupling according to any one of Claims 1 to 15,
**characterised in that** a centring biasing force acts on the seal.

## Revendications

1. Attelage à boule servant à l'attelage d'un véhicule tracteur à un véhicule tracté, comprenant une boule d'attelage (14 ; 114 ; 214 ; 414) reliée ou pouvant être reliée à l'un des véhicules : véhicule tracteur ou véhicule tracté et un coussinet d'attelage (12 ; 112 ; 212 ; 312 ; 412) relié ou pouvant être relié à, respectivement, l'autre véhicule, lequel coussinet peut être couplé à la boule d'attelage (14 ; 114 ; 214; 414), dans lequel plus précisément, la boule d'attelage (14 ; 114 ; 214 ; 414) présente une zone d'appui convexe (20 ; 120 ; 220) et le coussinet d'attelage (12 ; 112 ; 212 ; 312 ; 412) présente dans un évidement d'attelage (15 ; 115 ; 215 ; 315 ; 415) une zone de contre-appui concave (22 ; 122 ; 222 ; 322) lesquelles s'appuient l'une contre l'autre lorsque l'attelage à boule est à l'état attelé en formant une zone d'appui d'attelage (24 ; 124 ; 224) et entre lesquelles la boule d'attelage (14 ; 114 ; 214 ; 414) et le coussinet d'attelage (12 ; 112 ; 212 ; 312 ; 412) peuvent être séparés lors du dételage de l'attelage à boule,
dans lequel en outre un élément d'attelage : coussinet d'attelage (12 ; 112 ; 212 ; 312 ; 412) ou boule d'attelage (14 ; 114 ; 214 ; 414) porte un joint (18 ; 118 ; 218 ; 318 ; 418) qui étanche à l'état attelé, la zone d'appui d'attelage (24 ; 124 ; 224) vis-à-vis de l'environnement,
**caractérisé en ce que** le joint (18 ; 118 ; 218 ; 318 ; 418) est reçu, par rapport à un axe d'attelage (A) contenant à l'état attelé le centre de la boule d'attelage (14 ; 114 ; 214 ; 414) et traversant l'évidement d'attelage (15 ; 115 ; 215 ; 315 ; 415) du coussinet d'attelage (12 ; 112 ; 212 ; 312 ; 412) de manière essentiellement centrale, avec jeu radial dans l'élément d'attelage (12 ; 112 ; 212 ; 312 ; 412) le portant.

2. Attelage à boule selon la revendication 1,
**caractérisé en ce que** le joint (18 ; 118 ; 218 ; 318 ; 418) est un joint périphérique (18 ; 118 ; 218 ; 318 ; 418).

3. Attelage à boule selon la revendication 2,
**caractérisé en ce que** le joint (18 ; 118 ; 218 ; 318 ; 418) comprend un joint torique (18).

4. Attelage à boule selon l'une quelconque des revendications 2 à 3, **caractérisé en ce que** le joint (18 ; 118 ; 218 ; 318 ; 418) comprend une bague d'étanchéité (218) formée par une opération de façonnage primaire, de préférence par moulage par injection.

5. Attelage à boule selon l'une quelconque des revendications précédentes,
**caractérisé en ce que** le joint (18 ; 118 ; 218 ; 318 ; 418) comprend un corps d'étanchéité (318a ; 418a), qui peut être maintenu au niveau de l'élément d'attelage (12 ; 112 ; 212 ; 312 ; 412) recevant le joint (18 ; 118 ; 218 ; 318 ; 418), avec une zone d'étanchéité (318b ; 418b) qui y est prévue, laquelle est réalisée pour s'appuyer contre, respectivement, l'autre élément d'attelage (12 ; 112; 212; 312; 412).

6. Attelage à boule selon l'une quelconque des revendications 2 à 5,
**caractérisé en ce que** le joint (18 ; 118 ; 218 ; 318 ; 418) est reçu dans un évidement de logement annulaire (16 ; 116 ; 216 ; 316 ; 416), de préférence par déformation axiale.

7. Attelage à boule selon la revendication 6,
**caractérisé en ce que** le joint (18 ; 118 ; 218 ; 318 ; 418) s'appuie contre au moins une, de préférence contre les deux sections de paroi de délimitation (16a, 16b ; 116a, 116b ; 216a, 216b ; 316a, 316b ; 416a, 416b) délimitant l'évidement de logement (16 ; 116 ; 216) dans le sens axial ou fait directement face à celles-ci avec jeu axial.

8. Attelage à boule selon la revendication 6 ou 7,
**caractérisé en ce que** l'évidement de logement (16 ; 116 ; 216 ; 316 ; 416) est réalisé dans le coussinet d'attelage (12 ; 112 ; 212 ; 312 ; 412), dans lequel le diamètre de la section de paroi de délimitation (16c ; 116c ; 216c ; 316c ; 416c) délimitant l'évidement de logement (16 ; 116 ; 216 ; 316 ; 416) dans le sens radial est supérieur au diamètre extérieur du joint (18 ; 118 ; 218 ; 318 ; 418) inséré dans l'évidement de logement (16 ; 116 ; 216 ; 316 ; 416)

9. Attelage à boule selon la revendication 8, en intégrant les revendications 2 et 5,
**caractérisé en ce que** la zone d'étanchéité (318b ; 418b), lors de l'observation d'une section transversale du joint (318 ; 418) dans un état dételé non chargé disposé au niveau du coussinet d'attelage (312 ; 412) suivant un plan de coupe contenant un axe central (S) du joint périphérique (318 ; 418), fait saillie en s'éloignant du corps d'étanchéité (318a ; 418a) sous forme de lèvre d'étanchéité et ce avec une composante d'extension allant dans le sens radial vers l'axe central (S) ainsi qu'avec une composante d'extension s'éloignant dans le sens axial de l'embouchure (340 ; 440) du coussinet d'attelage (312 ; 412).

10. Attelage à boule selon la revendication 9,
**caractérisé en ce que** la zone d'étanchéité (318b ; 418b) fait saillie, dans le sens axial à plus grande proximité de l'extrémité la plus proche de l'embouchure (en 318c ; en 418c) du corps d'étanchéité (318a ; 418a), de celui-ci.

11. Attelage à boule selon l'une quelconque des revendications précédentes,
**caractérisé en ce que** le joint (418), en particulier le corps d'étanchéité (418a), présente au moins un canal (446), de préférence une pluralité de canaux (446), qui traverse le joint (418) dans le sens radial.

12. Attelage à boule selon la revendication 11,
**caractérisé en ce que** l'au moins un canal (446) est réalisé sous forme d'enfoncement axial dans un des côtés frontaux (418e) du joint (418), en particulier du corps d'étanchéité (418a), dirigé dans le sens axial.

13. Attelage à boule selon la revendication 11 ou 12, en intégrant la revendication 2,
**caractérisé en ce que** le joint périphérique (418) présente une pluralité de canaux (446), qui sont disposés dans le sens périphérique au moins en partie, de préférence entièrement, à une distance essentiellement identique l'un de l'autre.

14. Attelage à boule selon l'une quelconque des revendications précédentes,
**caractérisé en ce que** le joint (18 ; 118 ; 218 ; 318 ; 418) est reçu dans le coussinet d'attelage (12 ; 112 ; 212 ; 312 ; 412) et s'appuie contre la surface de la section hémisphérique (19 ; 119 ; 219) de la boule d'attelage (14 ; 114 ; 214 ; 414) s'éloignant du coussinet d'attelage (12 ; 112 ; 212 ; 312 ; 412).

15. Attelage à boule selon l'une quelconque des revendications précédentes,
**caractérisé en ce que** le joint (18 ; 118 ; 218 ; 318 ; 418) reçu dans un élément d'attelage (12 ; 112 ; 212 ; 312 ; 412) s'appuie contre, respectivement, l'autre élément d'attelage (14 ; 114 ; 214 ; 414) de manière étanche au fluide, mais pas étanche au gaz

16. Attelage à boule selon l'une quelconque des revendications précédentes, en intégrant la revendication 6,
**caractérisé en ce que** le joint (18 ; 118 ; 218 ; 318 ; 418) est reçu de manière flottante dans l'évidement de logement (16 ; 116 ; 216 ; 316 ; 416).

17. Attelage à boule selon l'une quelconque des revendications 1 à 15,
**caractérisé en ce qu'**une force de précontrainte centrante agit sur le joint.
